# EUROPEAN PATENT SPECIFICATION

(11) **EP 3 575 961 B1**
(45) Date of publication and mention of the grant of the patent: **23.09.2020**
(21) Application number: 19162115.0
(22) Date of filing: 12.03.2019
(51) Int. Cl.: G06F 9/445

(54) **METHOD AND APPARATUS FOR UPDATING APPLICATION PREDICTION MODEL, STORAGE MEDIUM, AND TERMINAL**
VERFAHREN UND VORRICHTUNG ZUR AKTUALISIERUNG EINES ANWENDUNGSVORHERSAGEMODELLS, SPEICHERMEDIUM UND ENDGERÄT
PROCÉDÉ ET APPAREIL DE MISE À JOUR DE MODÈLE DE PRÉDICTION D'APPLICATION, SUPPORT D'INFORMATIONS ET TERMINAL

(30) Priority: 29.05.2018 CN 201810532749
(43) Date of publication of application: 04.12.2019
(73) Proprietor: GUANGDONG OPPO MOBILE TELECOMMUNICATIONS CORP., LTD., Wusha, Chang'an Dongguan, Guangdong 523860 (CN)
(72) Inventor: CHEN, Yan, Dongguan, Guangdong 523860 (CN); LIU, Yaoyong, Dongguan, Guangdong 523860 (CN)
(74) Representative: Manitz Finsterwald Patent- und Rechtsanwaltspartnerschaft mbB

(56) References cited:
- US-A1- 2016 162 148
- TINGXIN YAN ET AL: "Fast app launching for mobile devices using predictive user context", MOBISYS 2012: 10TH INTERNATIONAL CONFERENCE ON MOBILE SYSTEMS, APPLICATIONS AND SERVICES, 25 June 2012 (2012-06-25), page 113, XP055106616, DOI: 10.1145/2307636.2307648 ISBN: 978-1-45-031301-8

## Description

### TECHNICAL FIELD

The present disclosure relates to the field of application preloading technologies and, in particular, to a method and an apparatus for updating an application prediction model, a storage medium, and a terminal.

### BACKGROUND

At present, terminals such as smart phones, tablets, laptops, and smart home appliances have become indispensable electronic devices in people's daily lives. As terminal devices become more and more intelligent, most terminal devices are loaded with an operating system, enabling a wide variety of applications to be installed in the terminal devices to meet different user demands.

As the configuration of terminal devices continues to be promoted, dozens or even hundreds of applications can be installed in most terminal devices. As the functions of the applications become more and more abundant, the resources required for running the applications also increase. When the user chooses to launch an application, the terminal loads the resources required for launching the application. After the loading is completed, the terminal presents the initial interface of the application. The whole process usually takes several seconds or even more than ten seconds, resulting in an inefficiency of launching which needs to be improved.

The document from Tingxin YAN et al ("Fast app launching for mobile devices using predictive user context", 10th International Conference on Mobile Systems, Applications and Services, 25 June 2012) describes a FALCON system to remedy slow app launch, where FALCON uses contexts such as user location and temporal access patterns to predict app launches before they occur.

US 2016/162148 A1 describes techniques for application launching and switching. An example method includes receiving an interactive gesture at a computing device, when the interactive gesture matches a predefined gesture, determining a current context of the computing device based at least on one or more tasks, based on the determined context, identifying one or more software applications to perform the one or more tasks, displaying one or more user interface elements representing the software applications, where the user interface elements are selectable to instantiate the identified software applications.

### SUMMARY

Embodiments of the present disclosure provide a method and an apparatus for updating an application prediction model, a storage medium, and a terminal, which can optimize the preloading scheme of applications in a terminal.

In a first aspect, an embodiment of the present disclosure provides a method for updating an application prediction model, including:
detecting that an application uninstallation event is triggered;
determining a first application which is uninstalled;
deleting a data log of the first application from training sample data when training sample data of an application prediction model includes the data log of the first application, and generating target training sample data, where the application prediction model is a pre-trained learning model capable of predicting an application to be preloaded; and
updating the application prediction model based on the target training sample data.

In an example, an apparatus for updating an application prediction model is provided, including:
an application determining module, configured to detect that an application uninstallation event is triggered, and determine a first application which is uninstalled;
a sample data generating module, configured to: delete a data log of the first application from training sample data when training sample data of an application prediction model includes the data log of the first application, and generate target training sample data; and
a prediction model updating module, configured to update the application prediction model based on the target training sample data.

In a further aspect, an embodiment of the present disclosure provides a computer readable storage medium, having a computer program stored thereon, for implementing the method for updating the application prediction model according to the first aspect of embodiments of the present disclosure.

In yet a further aspect, an embodiment of the present disclosure provides a terminal, including a memory, a processor, and a computer program stored on the memory and operable on the processor, where the processor implements the method for updating the application prediction model according to the first aspect of embodiments of the present disclosure when running the computer program.

In the solution for updating the application prediction model provided by embodiments of the present disclosure, it is detected that the application uninstallation event is triggered, and the first application which is uninstalled is determined; when the training sample data of the application prediction model includes the data log of the first application, the data log of the first application is deleted from the training sample data, and the target training sample data is generated; and the application prediction model is updated based on the target training sample data. By adopting the above technical solution, the problem of inconsistency between the actually installed application and the application-related data log included in the training sample data of the application prediction model when an application is uninstalled can be solved, and the accuracy for predicting an application to be launched using the application prediction model can be effectively improved.

### BRIEF DESCRIPTION OF DRAWINGS

FIG. 1 is a flow chart of a method for updating an application prediction model provided by an embodiment of the present disclosure;
FIG. 2 is a schematic diagram showing a relative position relationship between a preloaded active window stack and a display area of a display screen provided by an embodiment of the present disclosure;
FIG. 3 is a schematic diagram showing another relative position relationship between a preloaded active window stack and a display area of a display screen provided by an embodiment of the present disclosure;
FIG. 4 is a schematic diagram showing an application interface move provided by an embodiment of the present disclosure;
FIG. 5 is a flow chart of another method for updating an application prediction model provided by an embodiment of the present disclosure;
FIG. 6 is a flow chart of still another method for updating an application prediction model provided by an embodiment of the present disclosure;
FIG. 7 is a block diagram of an apparatus for updating an application prediction model provided by an embodiment of the present disclosure;
FIG. 8 is a block diagram of a terminal provided by an embodiment of the present disclosure;
FIG. 9 is a block diagram of another terminal provided by an embodiment of the present disclosure.

### DESCRIPTIONS OF EMBODIMENTS

Before discussing the exemplary embodiments in more detail, it should be noted that some exemplary embodiments are described as a process or method as depicted in a flow chart. Although the flow chart describes the steps as sequential processing, many of the steps can be implemented in parallel, concurrently, or simultaneously. In addition, the order of the steps can be rearranged. The processing may be terminated when its operation is completed, but may also have additional steps not included in the drawings. The processing may correspond to methods, functions, procedures, subroutines, subprograms, and the like.

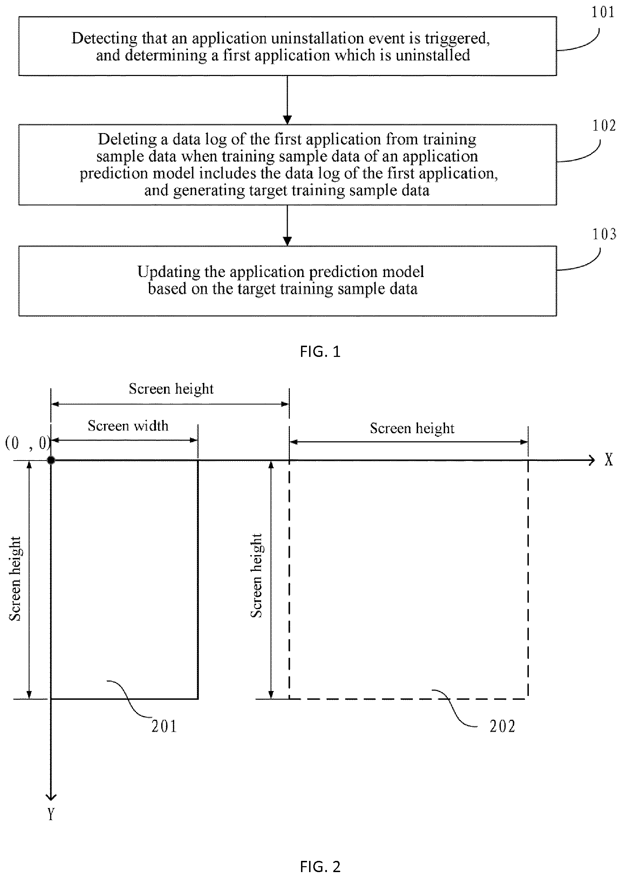

FIG. 1 is a flow chart of a method for updating an application prediction model provided by an embodiment of the present disclosure. The method may be executed by an apparatus for updating an application prediction model, where the apparatus may be implemented by software and/or hardware, and generally may be integrated into a terminal. As shown in FIG.1, the method includes:
Step 101, detecting that an application uninstallation event is triggered, and determining a first application which is uninstalled.

As an example, the terminal in embodiments of the present disclosure may include a terminal device such as a mobile phone, a tablet computer, a laptop, and a smart home appliance. The terminal is loaded with an operating system.

In an embodiment of the present disclosure, when it is detected that the application uninstallation event is triggered, that is, when it is detected that an application in the terminal is uninstalled, the currently uninstalled application is obtained, and the currently uninstalled application is taken as the first application. The trigger condition for the application uninstall event is not limited. For example, the application uninstallation event is triggered when it is detected that a user performs an uninstall operation on an application in a setting application; or, the application uninstallation event is triggered when it is detected that the user performs an uninstall operation on an application in a software butler application; or, the application uninstallation event is triggered when it is detected that the user long presses an application icon of an application in the mobile terminal and performs a deleting operation.

Step 102, deleting a data log of the first application from training sample data when training sample data of an application prediction model includes the data log of the first application, and generating target training sample data.

In embodiments of the present disclosure, the application prediction model can be interpreted as a pre-trained learning model capable of predicting an application to be preloaded. The application prediction model may be generated by training a preset machine learning model based on the collected sample training data. The algorithms used may include a recurrent neural network (RNN), a long Short-term memory (LSTM) network, a threshold loop unit, a simple loop unit, an automatic encoder, a decision tree, a random forest, feature mean classification, a classification and regression tree, hidden Markov, a K-nearest neighbor (KNN) algorithm, a logistic regression model, a Bayesian model, a Gaussian model and KL divergence (Kullow-Leibler divergence), etc.

In an embodiment, training samples can be collected as the sample training data during the user using the terminal; the preset training model is trained by using the sample training data; and finally, the application prediction model for predicting the application to be preloaded is obtained. As an example, elements included in the sample training data may include: a time sequence or an order sequence in which applications are launched; when, where, and how often an application is launched; the operating state of the terminal, such as the on-off state of a mobile data network, the connection state of a wireless hotspot, the identity information of a connected wireless hotspot, currently running applications, the previous foreground application, the duration in which the current applications stay in the background, the time when the current applications were recently switched to the background, the insert and extract state of a headphone jack, the charging state, the battery level information, the screen display duration, etc.; and data collected by sensors such as a motion sensor, a light sensor, a temperature sensor, and a humidity sensor integrated in the terminal.

In an embodiment of the present disclosure, when it is detected that the application uninstallation event is triggered, that is, when an application is detected to be uninstalled, if the training sample data of the pre-trained application prediction model includes the data log related to the uninstalled application, then the accuracy for predicting the application to be preloaded by the application prediction model tends to be degraded. In addition, if the application prediction model is still used to determine the application to be preloaded when an application preloading event is triggered (where the training sample data of the application prediction model includes a data log related to the uninstalled application), then the determined to-be-preloaded application tends to include the uninstalled application. Therefore, when the training sample data of the application prediction model includes the data log of the first application which is uninstalled, the data log of the first application is deleted from the training sample data, and the target training sample data is generated, so as to facilitate the subsequent re-training of the new application prediction model according to the updated training sample data, that is, updating the application prediction model according to the updated training sample data.

In an embodiment, when the training sample data of the application prediction model includes multiple groups of application timing correlation sequences, the application timing correlation sequence corresponding to the first application in the training sample data can be deleted. In an embodiment, when the training sample data includes sample data formed by state feature information of a sample collection moment and a sample tag of the state feature information, the sample data that takes the first application as the sample tag can be deleted, where the sample tag involves an application that is launched within a preset time period after the sample collection moment. The specific content included in the sample data is not limited in embodiments of the present disclosure.

Step 103, updating the application prediction model based on the target training sample data.

In an embodiment of the present disclosure, the application prediction model is updated based on the target training sample data, that is, the preset machine learning model is re-trained based on the target training sample data, and the network parameters of the preset machine learning model are automatically adjusted during the training process to generate a new application prediction model.

In the method for updating the application prediction model provided by the embodiments of the present disclosure, it is detected that the application uninstallation event is triggered, and the first application which is uninstalled is determined; when the training sample data of the application prediction model includes the data log of the first application, the data log of the first application is deleted from the training sample data, and the target training sample data is generated; and the application prediction model is updated based on the target training sample data. By adopting the above technical solution, the problem of inconsistency between the actually installed application and the application-related data log included in the training sample data of the application prediction model when an application is uninstalled can be solved, and the accuracy for predicting an application to be launched using the application prediction model can be effectively improved.

In some embodiments, deleting the data log of the first application from the training sample data, and generating target training sample data includes: deleting a data log of a preset application use sequence from the training sample data to generate the target training sample data; where the preset application use sequence includes an application sequence corresponding to the first application and a second application adjacent to the first application. The advantage of such setting is that, the application sequence corresponding to the first application which is uninstalled can be deleted, which can further improve the accuracy for predicting the application to be launched by using the application prediction model.

In an embodiment of the present disclosure, an application use timing correlation sequence in a preset time period is obtained, and grouped according to the timing relationship to obtain multiple groups of use timing correlation subsequences. Each group of the use timing correlation subsequences includes an application sequence related to at least two applications, and the use timing correlation subsequences can be used as the training sample data of the application prediction model. As an example, the obtained application use timing correlation sequence for one day is: Application A-Application B-Application C-Application D-Application A-Application E-Application F, and the first application which is uninstalled is Application C. If the application use timing correlation sequence is grouped, then the resulting multiple groups of use timing correlation subsequences are: Application A-Application B, Application B-Application C, Application C-Application D, Application D-Application A, Application A-Application E, and Application E-Application F. Obviously, the second application adjacent to the Application C in the training sample data includes Application B and Application D, and then the "Application B-Application C" and the "Application C-Application D" are deleted. For another example, if the application use timing correlation sequence is grouped, and the resulting multiple groups of use timing correlation subsequences are: Application A-Application B-Application C, Application B Application C-Application D, Application C-Application D-Application A, Application D-Application A-Application E, and Application A-Application E-Application F, then the "Application A-Application B-Application C", "Application B-Application C-Application D", and "Application C-Application D-Application A" can be deleted.

In some embodiments, the training sample data includes the sample data formed by the state feature information of the sample collection moment and the sample tag of the state feature information, where the sample tag involves an application that is launched within a preset time period after the sample collection moment; deleting the data log of the first application from the training sample data, and generating target training sample data includes: deleting the sample data that takes the first application as the sample tag from the training sample data to generate the target training sample data. The advantage for such setting is that, the accuracy for predicting the application to be launched can be further effectively improved by using the application prediction model.

In an embodiment of the present disclosure, the state feature information of each sample collection moment in a preset collection period is taken as a training sample; the application which is launched within the preset time period after the sample collection moment is monitored, and the monitoring result can be taken as the sample tag of the training sample; and the training sample marked with the sample tag is taken as the training sample data of the application prediction model. As an example, the preset collection period is two weeks, during which the state feature information is collected every other hour, and the preset time period is set to 10 minutes. For example, the first state feature information collection is performed at 8: 00, and the application that is launched during the period of 8: 00-8: 10 is monitored, and if Application A is launched, then Application A is taken as the sample tag of the current state feature information; the second state feature information collection is performed at 9: 00, and the application that is launched during the period of 9: 00-9: 10 is monitored, and if Application B is launched, then Application B is taken as the sample tag of the current state feature information... , and so on. It should be noted that the length of the preset time period is not limited in embodiments of the present disclosure. The state feature information may include at least one of the following: the time information, the date type, the on-off state of the mobile data network, the connection state of the wireless hotspot, the identity information of the connected wireless hotspot, the previous foreground application, the insert and extract state of the headphone jack, the charging state, the battery level information, the screen display duration, the terminal motion state, the location information, the Bluetooth connection state, and the duration of last screen off.

As an example, the first application which is uninstalled is Application B, then the sample data that takes Application B as the sample tag is deleted from the training sample data. For example, the training sample data includes a total of 5000 pieces of sample data, where 100 pieces of the sample data take Application B as the sample tag, then the generated target training sample data includes 4900 pieces of the sample data after the sample data that takes Application B as the sample tag is deleted from the training sample data.

In some embodiments, deleting the data log of the first application from the training sample data, and generating target training sample data includes: determining a third application of the same application type as the first application; and replacing the data log of the first application in the training sample data with a data log of the third application to generate the target training sample data. The advantage of such setting is that, the data log of the first application can be replaced with another application of the same application type as the first application which is uninstalled, which can improve the hit rate of preloading the application that the user actually launches.

It can be understood that the user uninstalls the first application, and may use other applications of the same application type as the first application. For example, Baidu Map and Amap are installed in the terminal. The user uninstalls Baidu Map, and may use Amap as a substitute as to the use status. If all the data logs of the first application which is uninstalled are directly deleted, the prediction for the application that the user actually launches tends to fail. Moreover, when the data log of the first application accounts for a large proportion of all the training sample data, the accuracy for training the application prediction model may be affected. Therefore, the third application of the same application type as the first application can be determined; and the data log of the first application in the training sample data is replaced with the data log of the third application to generate the target training sample data.

In the embodiments of the present disclosure, the division rule for the application type is not limited. For example, the applications may be classified according to the association relationship with other applications (for example, Alipay and WeChat are applications that are strongly associated with an application of the shopping type, thus Alipay and WeChat may be taken as applications of the payment type); the applications may also be classified according to default types in an app store (e.g., the social type, the office type, the game type, the photography and video type, the education type, etc.). As an example, the first application which is uninstalled is Taobao, belonging to an application of the shopping type. JD Mall also belongs to an application of the shopping type. Therefore, JD Mall can be taken as the third application of the same application type as Taobao. The data log of Taobao in the training sample data is replaced with the data log of JD Mall, to generate the target training sample data.

As an example, the training sample data includes multiple groups of application use timing correlation sequences, i.e., Taobao-Alipay, Alipay-QQ, QQ-WeChat, WeChat-Meituan Takeout, Meituan Takeout-Taobao, Taobao-KuGou Music. Then, the target training sample data generated by replacing the data log of Taobao in the training sample data with the data log of JD Mall is: JD Mall Alipay, Alipay-QQ, QQ-WeChat, WeChat-Meituan Takeout, Meituan Takeout-JD Mall, JD Mall-KuGou Music. As another example, the training sample data includes the sample data formed by the state feature information of the sample collection moment and the sample tag of the state feature information; where the sample tag involves an application that is launched within a preset time period after the sample collection moment. The training sample data includes 10 pieces of sample data that take Taobao as the sample tag, then the 10 pieces of the sample data that takes Taobao as the sample tag are replaced with sample data that takes JD Mall as the sample tag. It can be understood that the corresponding state feature information in the replaced sample data is not changed.

In some embodiments, updating the application prediction model based on the target training sample data further includes: predicting a first to-be-preloaded application based on the application prediction model when an application preloading event is triggered; and preloading the first to-be-preloaded application. The advantage of such setting is that, the application to be preloaded can be quickly predicted by the application prediction model.

In an embodiment, after updating the application prediction model based on the target training sample data, the method further includes: predicting a second to-be-preloaded application based on the updated application prediction model when an application preloading event is triggered; and preloading the second to-be-preloaded application. The advantage of such setting is that, the application to be preloaded can be quickly and accurately predicted based on the updated application prediction model, which can also avoid the situation that the predicted to-be-preloaded application still includes the uninstalled application.

As an example, the trigger condition for the application preloading event may be set according to an actual situation, which is not specifically limited in the embodiments of the present disclosure. For example, the application preloading event may be triggered when it is detected that the action of the user satisfies a preset condition (such as picking up the terminal, inputting a screen unlocking operation, or inputting a terminal unlocking operation, etc.); or, the application preloading event may be triggered when it is detected that the foreground application has changed; or, the application preloading event may be triggered immediately (or after a preset duration) after the predicting process of the to-be-preloaded application ends; or the application preloading event may be triggered at regular intervals. After the application preloading event is triggered, the system can detect that the application preloading event has been triggered by reading a flag or receiving a triggering instruction. The specific detecting manner is not limited in the embodiments of the present disclosure.

As an example, the application to be preloaded can be interpreted as an application that the user may launch soon, or may be a fixed application that is preset, or may be an application that is predicted in a certain manner, etc. The application to be preloaded may include one or more.

The description will be made in the following by taking the second to-be-preloaded application as an example.

In an embodiment of the present disclosure, the determining of the second to-be-preloaded application may include determining the second to-be-preloaded application according to a previous output result of the updated application prediction model, and may also include performing prediction using the updated application prediction model, and determining the second to-be-preloaded application according to the current output result of the updated application prediction model.

In an embodiment of the present disclosure, when there are multiple (N) second to-be-preloaded applications, the updated application prediction model can output a launching probability of each candidate application in the candidate application set, and a candidate application with a higher launching probability is determined to be the second to-be-preloaded application. In an embodiment, the determining of the second to-be-preloaded application includes: predicting a launching probability of a candidate application; and determining a preset number of candidate applications with higher launching probabilities as the second to-be-preloaded applications. As an example, the candidate application may include all applications installed in the terminal, or may include some of the applications. The some of the applications may not include system applications, and may not include applications that are rarely used by the user. The determining manner and the quantity of the candidate application are not limited in the embodiments of the present disclosure. In an embodiment, the candidate application may be determined according to the number of uses and/or a use duration of each application within a preset time period before the current moment, for example, one month before the current moment. When the number of uses and/or the use duration exceed a corresponding threshold, the corresponding application is determined as a candidate application. Or, applications are sorted according to the number of uses and/or the use duration, and the top ranked application is determined as a candidate application.

As an example, the updated application prediction model described above can be used to determine the launching probabilities of the candidate applications. For example, according to the training sample data during the training of the updated application prediction model, the current sample is collected, and the current sample is input into the updated application prediction model to obtain the launching probability of each candidate application. The high-to-low sorting of the launching probabilities can be performed, and the candidate applications ranked in the top N (N is a preset value) are determined as the applications to be loaded. The advantage of such setting is that, multiple applications can be preloaded, and the multiple applications are determined according to the launching probability, which can improve the accuracy of the prediction.

The specific process of preloading and the loaded resources are not limited in the embodiments of the present disclosure, and the description is made by taking the preloading of the second to-be-preloaded application as an example. For example, a corresponding hardware resource can be allocated for the second to-be-preloaded application, and the relevant data required for launching is loaded based on the allocated hardware resource. As an example, the process of preloading may include application process launching, application service launching, memory allocation, file content reading, network data acquisition, and interface rendering, etc. In addition, the preloaded resources may be determined according to the specific type of the second to-be-preloaded application. For example, if the second to-be-preloaded application is a social software, a launching screen, a contact list, recent message records and the like in the second to-be-preloaded application may be preloaded; if the second to-be-preloaded application is a game application, game background related data and the like in the second to-be-preloaded application may be preloaded.

In some embodiments, before preloading the first to-be-preloaded application, the method further includes: determining whether the first to-be-preloaded application includes the first application; deleting the first application from the first to-be-preloaded application when the first application is included in the first to-be-preloaded application; preloading the first to-be-preloaded application includes: preloading the first to-be-preloaded application from which the first application has been deleted. It could be understood that, in the process of updating the application prediction model based on the target training sample data, that is, when the updating of the application prediction model has not been finished or has not been started, if the application preloading event is triggered, the first to-be-preloaded application can be predicted based on the pre-trained application prediction model directly. However, the first application which is uninstalled may be included in the first to-be-preloaded application. Therefore, when it is determined that the first application is included in the first to-be-preloaded application, the first application is deleted from the first to-be-preloaded application, and the first to-be-preloaded application from which the first application has been deleted is preloaded, which can save system resources.

In some embodiments, preloading the first to-be-preloaded application includes: preloading an application interface of the first to-be-preloaded application based on a pre-created preloaded active window stack, where boundary coordinates of the preloaded active window stack are located outside a coordinate range of a display screen; or, preloading the second to-be-preloaded application includes: preloading an application interface of the second to-be-preloaded application based on a pre-created preloaded active window stack, where boundary coordinates of the preloaded active window stack are located outside a coordinate range of a display screen.

The following description is made by taking the preloading of the second to-be-preloaded application as an example.

In the embodiments of the present disclosure, an active window can be interpreted as an independent user-oriented interface that provides interaction and operation directly to the user, and different terms may be used to name the interface in different operating systems. For ease of understanding, the following description is made by using an Android operating system as an example.

In the Android system, the active window is called Activity. An Activity is a component responsible for interacting with a user, which provides a screen (which can be understood as a screen interface rather than a real display screen) for the user to interact with to finish a task. In an Android application, one Activity is usually a single screen that can display some controls, listen and handle user events. In the management of the Activity, there are two concepts: Task (task stack) and Stack (active window stack). The Task corresponds to an application, and the Task is used to store the Activity. One Task can store one or more Activities, and these Activities follow the principle of "first in, last out, last in, first out". The Stack is used to manage the Task. Usually, one Stack manages the Tasks to which the Activities to be displayed on one screen belongs. One Stack may manage one or more Tasks. Of course, the Stack as well follows the basic management principles for the stack. The screen described here is not necessarily a complete and independent display screen. Taking "two screens" as an example, these two screens may be two areas in a complete display screen that independently display their respective display contents. Of course, if the terminal has two or even more than two independent display screens, the "two screens" may also be two independent display screens.

The Android system supports a multi-window mode, which may include a split screen mode, a picture in picture mode, and a FreeForm. In the multi-window mode, the stack on which the application resides can have its own size, which may include the top, bottom, left, and right coordinates in the coordinate system with the top left corner of the terminal screen as the origin. For example, (a, b, c, d) generally describes the boundary of a rectangle, which can be represented by the coordinates of the upper left corner of the rectangle and the coordinates of the lower right corner, that is, the coordinates of the upper left corner of the rectangle are (a, b), while the coordinates of the lower right corner are (c, d), and such a rectangular area corresponds to the size of the Stack. The inner application layout in the Stack is based on the size of the Stack, which means that the application interface of the Activity is displayed within the boundary of the size.

In the multi-window mode, multiple applications can be allowed to be visible, including being visible to both the system and the user, and being visible to only the system. Being visible to both the system and the user refers to being displayed on the display screen, and visible to the user; being visible to only the system refers to being visible to the operating system while invisible to the user, and possibly being obscured by the application in the foreground or displayed outside the display screen as is implemented in the present disclosure.

In an embodiment of the present disclosure, preloading the application interface of the second to-be-preloaded application outside the display screen can be implemented based on a multi-window mechanism of the operating system. The size of the application is set outside the display screen through the multi-window mechanism to achieve the purpose of being invisible to the user, so that the display content of the foreground application on the display screen is not affected.

Generally, in the multi-window mode, there may be multiple types of Stacks, such as a Home Stack representing a Stack for a desktop application display, an App Stack representing a third-party application display, and a split screen Stack among others. In an embodiment of the present disclosure, a preloaded active window stack (i.e. a preload Stack) is added, which is used to represent a stack for a preloaded application display, and the boundary coordinates of the preload Stack are set outside the coordinate range of the display screen. The application to be preloaded can be displayed in this Stack. For the Android system, a new Stack dedicated to displaying preloaded applications can be created based on the multi-window mechanism of the Android system. In the embodiment of the present disclosure, a new Stack is created because the newly created preload Stack can have its own size and visibility, so as to achieve preloading outside the display screen.

The timing for creating the preload Stack is not limited in the embodiments of the present disclosure, The preload Stack can be set in a resident state by default before the terminal leaves the factory, that is, the preload Stack always exists; the preload Stack can also be created when the terminal is powered on or after the terminal is successfully unlocked; the preload Stack can also be created after the application preloading event is triggered (and before determining the second to-be-preloaded application), and so on. In an embodiment, preloading the application interface of the second to-be-preloaded application based on the pre-created preloaded active window stack includes: determining whether there is a pre-created preloaded active window stack; if not, creating a preloaded active window stack according to a preset rule; and preloading the application interface of the second to-be-preloaded application based on the created preloaded active window stack. The advantage of such setting is that, system resources can be saved by determining whether the preload Stack exists after determining the second to-be-preloaded application, if the preload Stack exists, no new creation being needed, and if the preload Stack does not exist, performing the creation. It can be understood that in the case when there are multiple second to-be-preloaded applications, that is, in the case when multiple applications need to be continuously preloaded in a short time, the preload Stack has already been created before the first one of the multiple second to-be-preloaded applications starts to be loaded, then the preload Stack exists before the second one of the multiple second to-be-preloaded applications starts to be loaded, and the above determining is not necessary.

The specific process of preloading the application interface of the second to-be-preloaded application based on the preload Stack is not limited in the embodiments of the present disclosure. For example, the application interface may be drawn and displayed based on the size of the preload Stack.

In some embodiments, preloading the application interface of the second to-be-preloaded application based on the pre-created preloaded active window stack includes: creating a target process of the second to-be-preloaded application; creating a task stack of the second to-be-preloaded application in the pre-created preloaded active window stack; launching an active window of the second to-be-preloaded application in the task stack based on the target process; and drawing and displaying the application interface of the second to-be-preloaded application based on the launched activity window. The advantage of such setting is that, the application interface of the second to-be-preloaded application can be drawn and displayed based on the preloaded active window stack outside the screen coordinate range, without interfering with the running and display of the foreground application, thus ensuring the system stability and meanwhile effectively improving the launching speed of the second to-be-preloaded application. The process of creating the target process can also include the initialization process of the target process. During the execution of the foregoing steps, the preloading of other resources, such as application service launching, memory allocation, file content reading, and network data acquisition, may also be involved. The preloading process of other resources is not limited in the embodiments of the present disclosure.

In some embodiments, the method further includes: sending a forged focus notification to the second to-be-preloaded application, and keeping drawing the application interface of the second to-be-preloaded application and displaying the update within a preset time period based on the forged focus notification. The advantage of such setting is that, the drawing and display of the application interface can be completed in the case when the focus of the second to-be-preloaded application is obtained and the second to-be-preloaded application is visible to the system, which improves the completeness of the preloading without affecting the focus of the foreground application. The focus in the embodiments of the present disclosure is also referred to as an input focus, and the forged focus is independent of the focus of the foreground application. Generally, for the current Android system, the focus is unique. For example, an input operation such as a touch is only effective for the focus. For the input focus information, the system end and the application end are consistent, and once the system end modifies the input focus information, the information on input focus information changes is sent to the application, so as to ensure the consistency between the input focus information of the system end and the application end. In an embodiment of the present disclosure, the purpose of forging the focus at the application end is achieved by manner of separating the input focus information of the system end and the application end. Specifically, in the embodiment of the present disclosure, a focus notification is forged for a to-be-preloaded application, so that the to-be-preloaded application has the focus information, while the focus information of the system end is still correct, thereby enabling the to-be-preloaded application to be normally drawn and achieving the purpose of being all loaded. The focus exists on the system end and the application end which can be regarded as a server and a client. The system end records the application which has a focus, and the application end stores a flag to identify whether the application end has a focus. The timing of forging the input focus may be the time when the window system of the Android creates a new window and the focus needs to be updated, then a forged focus notification is generated and transmitted. The method for forging a focus may be calling a method of a window for changing a focus of the window at the client, so that the window obtains the focus. Specifically, the forged focus notification may be sent based on a Binder mechanism. The Binder mechanism is the most commonly used method for inter-process communication of the Android system, which adopts a c/s architecture, that is, a client/service architecture.

In an embodiment of the present disclosure, the preset time period may be designed according to actual conditions, for example, the preset time period may be within a fixed duration range after starting the preloading, or may be a period from the start of the preloading to the completion of the preloading. In some embodiments, the length of the preset time period includes a play duration for playing a launching advertisement or a launching animation in the second to-be-preloaded application. Some applications usually play some advertisements or animations during the launching process. The play duration of an advertisement or an animation is usually from 3 seconds to more than ten seconds. During the playing of the advertisement or animation, the user may not be able to perform any operations, but wait for the playback to finish, which wastes valuable time. The advantage of such setting in the embodiment of the present disclosure is that, the launching advertisement or the launching animation can be played outside the screen before the second to-be-preloaded application is launched, and when the second to-be-preloaded application is launched, the main interface or other operable interfaces of the application can be directly accessed. Therefore, the operable time point of the second to-be-preloaded application is further advanced, reducing the waiting time.

In some embodiments, after preloading the application interfaces of the newly installed application and the second to-be-preloaded application based on the pre-created preloaded active window stack, the method further includes: moving an application interface of a target application included in the preloaded active window stack to the display screen for display when a launching instruction of the target application included in the second to-be-preloaded application is received. The advantage of such setting is that, when the target application really needs to be launched, the application interface already drawn is directly moved to the display screen for display, which can achieve the fast switching of the application interfaces and improve the launching speed.

In some embodiments, moving the application interface of the target application included in the preloaded active window stack to the display screen for display includes: moving a task stack of the target application included in the preloaded active window stack to the top of an application active window stack; and updating size information, configuration information, and the visibility of the task stack, so as to display the application interface of the target application on the display screen. The advantage of such setting is that, the stability of the interface moving process can be ensured, and it is ensured that problems such as the screen lag, the blank screen, or the slow move do not occur in the recovery process.

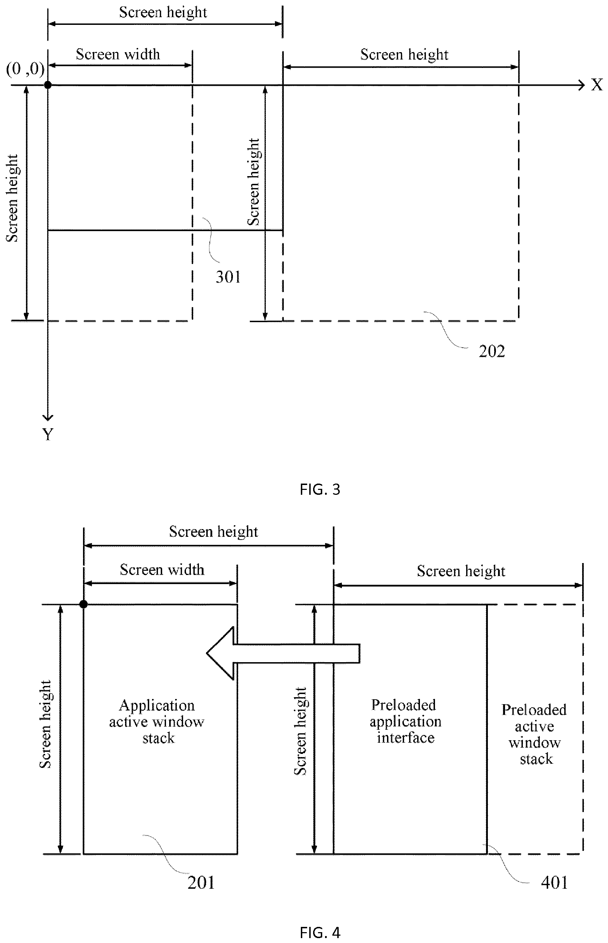

For some terminals, especially mobile terminals such as mobile phones and tablet computers, in order to facilitate the use of the user, the display modes of the display screen usually include a portrait mode and a landscape mode. Many applications are displayed in the portrait mode by default, while some applications use the landscape mode by default (such as some online games). During the use of the terminal, the display modes of some applications are switched between the landscape and portrait modes according to the direction in which the user holds the terminal. In some embodiments of the present disclosure, the boundary coordinates of the preloaded active window stack are (H, 0, 2H, H). The coordinate system of the boundary coordinates is system coordinates, and the origin of the system coordinates is in the upper left corner of the display screen, where H is the length of the long side of the display area of the display screen. That is to say, the side of H is the largest side of the display area of the display screen, which is the height of the display screen when displayed in the portrait mode, and the width of the display screen when displayed in the landscape mode. The purpose of such setting is to take into account the landscape display of the display screen, the landscape display of the preloaded application, and the normal display of some applications. FIG. 2 is a schematic diagram showing a relative position relationship between a preloaded active window stack and a display area of a display screen provided by an embodiment of the present disclosure. As shown in FIG. 2, the display screen is in the portrait mode, and the origin of the terminal system coordinates is the left vertex (0, 0) of the display screen 201. The width direction of the display screen 201 is the X axis, and the height direction is the Y axis. The boundary coordinates of the preload Stack 202 are (H, 0, 2H, H), where H is the screen height. That is, the area within the left rectangle formed by solid lines is the main screen display area, while the area within the right rectangle formed by dotted lines is the preload display area. FIG. 3 is a schematic diagram showing another relative position relationship between a preloaded active window stack and a display area of a display screen provided by an embodiment of the present disclosure. As shown in FIG. 3, the display screen is in the landscape mode, and the origin of the terminal system coordinates is the left vertex (0, 0) of the display screen 301. The height direction of the display screen 301 is the X axis, and the width direction is the Y axis. The boundary coordinates of the preload Stack 202 are (H, 0, 2H, H), where H is the screen height. That is, the area within the left rectangle formed by solid lines is the main screen display area, while the area within the right rectangle formed by dotted lines is the preload display area.

The reason for setting the boundaries of the preload Stack is as follows.

The horizontal coordinate of the upper left corner is H, which is to prevent the display screen (also called the main screen) from displaying the interface of the preloaded application in the case of the landscape mode, because the main screen has the landscape mode in addition to the portrait mode. When the main screen is in the landscape mode, in order to prevent the display area of the main screen from displaying part of the preloaded application, the horizontal coordinate of the upper left corner of the rectangular area of the preload stack is set to the screen height.

The vertical coordinate of the upper left corner is 0, which is to enable the preloaded application to correctly calculate the height of a status bar. In order to better design a user interface (UI), an Android application will customize the top status bar. If the corresponding upper vertical coordinate is not equal to 0, the height of the status bar may be wrong.

The horizontal coordinate of the lower right corner is 2H (2 times the screen height), that is, the width of the rectangle of the preload Stack = the screen height, so as to enable the size of the preload Stack to accommodate a landscape application (i.e., an application having an application interface displayed in the landscape mode) at the time of preloading.

The vertical coordinate of the lower right corner is H, that is, the height of the rectangle of the preload Stack = the screen height, so as to enable the size of the preload Stack to accommodate a portrait application at the time of preloading.

For the above reasons, the inventor sets the size of the preload Stack to (H, 0, 2H, H).

In addition, FIG. 4 is a schematic diagram showing an application interface move provided by an embodiment of the present disclosure. As shown in FIG. 4, when receiving a launching instruction of a target application, an application interface 401 of the target application included in a preloaded active window stack is moved to a display screen 201 for display. Specifically, a task to which the interface of the preloaded application belongs is moved to the top of an application active window stack, and size information, configuration information, and the visibility of the task are updated, so that the application interface can be normally displayed on the display screen.

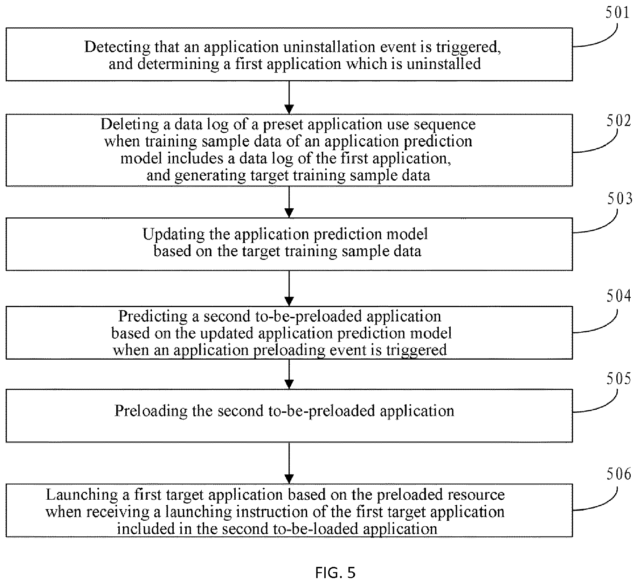

FIG. 5 is a flow chart of another method for updating an application prediction model provided by an embodiment of the present disclosure, the method including the following steps:
Step 501, detecting that an application uninstallation event is triggered, and determining a first application which is uninstalled.

For example, if it is detected that Meituan Takeout is uninstalled at 12: 00, then the first application which is uninstalled is Meituan Takeout.

Step 502, deleting a data log of a preset application use sequence when training sample data of an application prediction model includes a data log of the first application, and generating target training sample data.

The preset application use sequence includes an application sequence corresponding to the first application and a second application adjacent to the first application.

As an example, the training sample data of the application prediction model includes: KuGou Music-Eleme, Eleme-Meituan Takeout, Meituan Takeout-WeChat, WeChat-QQ, and QQ-Taobao. The second application adjacent to Meituan Takeout in the training sample data includes: Eleme and Wechat, then "Eleme-Meituan Takeout" and "Meituan Takeout-WeChat" in the above training sample data can be deleted. The remaining training sample data, i.e. KuGou Music-Eleme, WeChat-QQ, and QQ-Taobao is taken as target training samples.

Step 503, updating the application prediction model based on the target training sample data.

Step 504, predicting a second to-be-preloaded application based on the updated application prediction model when an application preloading event is triggered.

It can be understood that the second to-be-uninstalled application, which is predicted based on the updated application prediction model, does not include the first application which has been uninstalled.

Step 505, preloading the second to-be-preloaded application.

For example, if the second to-be-preloaded application is WeChat, the launching resource of WeChat can be preloaded. For example, a corresponding hardware resource can be allocated to WeChat, and the relevant data required for the launching can be loaded based on the allocated hardware resource. As an example, the preloading may include application process launching, application service launching, memory allocation, file content reading, network data acquisition and the like, which are of Wechat.

Step 506: launching a first target application based on the preloaded resource when receiving a launching instruction of the first target application included in the second to-be-loaded application.

As an example, when the user clicks on the desktop icon of WeChat, a launching instruction of WeChat is received, and WeChat is launched based on the preloaded resource, which can effectively improve the launching speed of WeChat.

In the method for updating the application prediction model provided by the embodiments of the present disclosure, it is detected that the application uninstallation event is triggered, and the first application which is uninstalled is determined; when the training sample data of the application prediction model includes the data log of the first application, the data log of the preset application use sequence is deleted from the training sample data, and the target training sample data is generated, where the preset application use sequence includes an application sequence corresponding to the first application and the second application adjacent to the first application; and when the application preloading event is triggered, the second to-be-preloaded application is predicted based on the updated application prediction model, and the second to-be-preloaded application is preloaded. The above technical solution can solve the problem of inconsistency between the actually installed application and the application-related data log included in the training sample data of the application prediction model when an application is uninstalled, and can further improve the accuracy for predicting an application to be launched using the application prediction model.

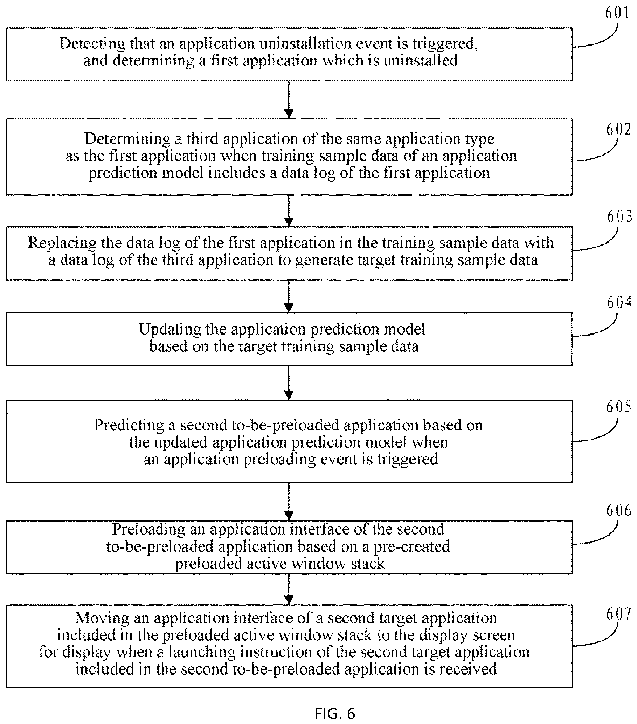

FIG. 6 is a flow chart of another method for updating an application prediction model provided by an embodiment of the present disclosure, the method including the following steps:
Step 601, detecting that an application uninstallation event is triggered, and determining a first application which is uninstalled.
Step 602, determining a third application of the same application type as the first application when training sample data of an application prediction model includes a data log of the first application.

For example, if the uninstalled first application is Baidu Map, then Amap may be determined as the third application of the same application type as Baidu Map, where the application type of Baidu Map and Amap may be taken as the navigation type.

Step 603, replacing the data log of the first application in the training sample data with a data log of the third application to generate target training sample data.

As an example, when the training sample data of the application prediction model includes multiple groups of application timing correlation sequences, the application sequence corresponding to the first application and the second application adjacent to the first application in the training sample data can be deleted. For example, in the case that the training sample data is: SMS-WeChat, WeChat-Taobao, Taobao-Alipay, Alipay-Baidu Map, and Baidu Map-Camera, where the second applications are: Alipay and Camera, then "Alipay-Baidu Map" can be replaced with "Alipay-Amap", and "Baidu Map-Camera" can be replaced with "Amap-Camera".

As another example, the training sample data includes sample data formed by state feature information of a sample collection moment and a sample tag of the state feature information; when the sample tag involves an application that is launched within a preset time period after the sample collection moment, the sample data that takes the first application as the sample tag can be replaced with the sample data that takes the third application as the sample tag. For example, the sample data that takes Baidu Map as the sample tag can be replaced with the sample data that takes Amap as the sample tag.

Step 604, updating the application prediction model based on the target training sample data.

Step 605, predicting a second to-be-preloaded application based on the updated application prediction model when an application preloading event is triggered.

In an embodiment, in the process of updating the application prediction model based on the target training sample data, if an application preloading event is triggered, a first to-be-preloaded application can be predicted based on the application prediction model. At this time, it can be further determined whether the first to-be-preloaded application includes the first application, and when the first to-be-preloaded application includes the first application, the first application is deleted from the first to-be-preloaded application, and the first to-be-preloaded application, from which the first application has been deleted, is preloaded.

Step 606, preloading an application interface of the second to-be-preloaded application based on a pre-created preloaded active window stack.

The boundary coordinates of the preloaded active window stack are located outside the coordinate range of a display screen.

Step 607, moving an application interface of a second target application included in the preloaded active window stack to the display screen for display when a launching instruction of the second target application included in the second to-be-preloaded application is received.

As an example, when the user clicks on the desktop icon of Amap, the launching instruction of Amap is received, and the application interface of Amap included in the preloaded active window stack is moved to the display screen for display.

In the method for updating the application prediction model provided by an embodiment of the present disclosure, when the training sample data of the application prediction model includes the data log of the first application which is uninstalled, the third application of the same application type as the first application is determined; the data log of the first application in the training sample data is replaced with the data log of the third application to generate the target training sample data; the second to-be-preloaded application is predicted based on the updated application prediction model; and the second to-be-preloaded application is preloaded. The data log of the first application can be replaced with another application of the same application type as the first application which is uninstalled, which can further improve the hit rate of preloading the application that the user actually launches.

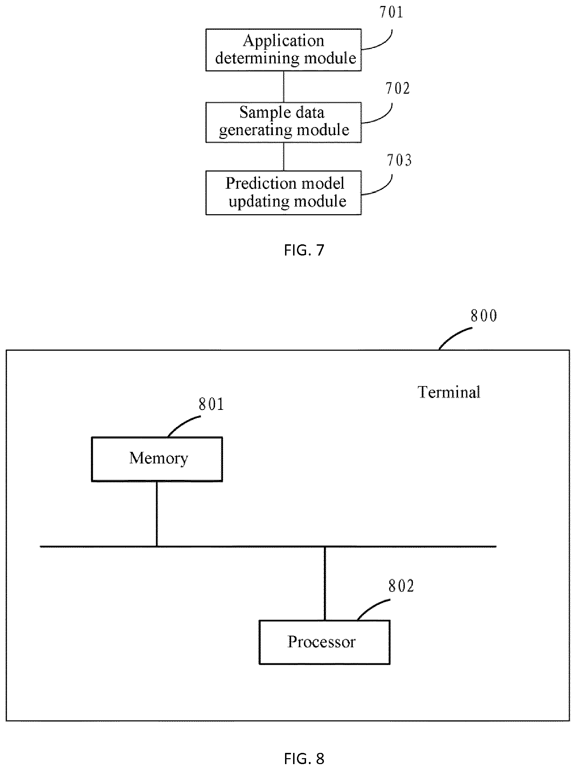

FIG. 7 is a structural diagram of an apparatus for updating an application prediction model provided by an embodiment of the present disclosure. The apparatus may be implemented by software and/or hardware, and is generally integrated in a terminal, for updating the application prediction model when an application is uninstalled by performing the method for updating the application prediction model. As shown in FIG. 7, the apparatus includes:
an application determining module 701, configured to detect that an application uninstallation event is triggered, and determine a first application which is uninstalled;
a sample data generating module 702, configured to, delete a data log of the first application from training sample data when training sample data of an application prediction model includes the data log of the first application, and generate target training sample data; and
a prediction model updating module 703, configured to update the application prediction model based on the target training sample data.

The apparatus for updating the application prediction model provided by the embodiments of the present disclosure is configured to: detect that the application uninstallation event is triggered, and determine the first application which is uninstalled; delete the data log of the first application from the training sample data when the training sample data of the application prediction model includes the data log of the first application, and generate the target training sample data; and update the application prediction model based on the target training sample data. By adopting the above technical solution, the problem of inconsistency between the actually installed application and the application-related data log included in the training sample data of the application prediction model when an application is uninstalled can be solved, and the accuracy for predicting an application to be launched using the application prediction model can be effectively improved.

In an embodiment, the sample data generating module is configured to:
delete a data log of a preset application use sequence from the training sample data to generate the target training sample data; where the preset application use sequence includes an application sequence corresponding to the first application and a second application adjacent to the first application.

In an embodiment, the training sample data includes sample data formed by state feature information of a sample collection moment and a sample tag of the state feature information; where the sample tag involves an application that is launched within a preset time period after the sample collection moment.

The sample data generating module is configured to:
delete sample data that takes the first application as the sample tag from the training sample data to generate the target training sample data.

In an embodiment, the sample data generating module is configured to:
determine a third application of the same application type as the first application; and
replace the data log of the first application in the training sample data with a data log of the third application to generate the target training sample data.

In an embodiment, the apparatus further includes:
a first application preloading module, configured to: predict a first to-be-preloaded application based on the application prediction model when an application preloading event is triggered during updating the application prediction model based on the target training sample data; and preload the first to-be-preloaded application; or
the first application preloading module, configured to: predict a second to-be-preloaded application based on the updated application prediction model when the application preloading event is triggered after updating the application prediction model based on the target training sample data; and preload the second to-be-preloaded application.

In an embodiment, the first application preloading module is further configured to: before preloading the first to-be-preloaded application,
determine whether the first to-be-preloaded application includes the first application; and
delete the first application from the first to-be-preloaded application when the first application is included in the first to-be-preloaded application.

Preloading the first to-be-preloaded application includes:
preloading the first to-be-preloaded application from which the first application has been deleted.

In an embodiment, preloading the first to-be-preloaded application includes: preloading an application interface of the first to-be-preloaded application based on a pre-created preloaded active window stack, where the boundary coordinates of the preloaded active window stack are located outside the coordinate range of a display screen; or,
preloading the second to-be-preloaded application includes: preloading an application interface of the second to-be-preloaded application based on the pre-created preloaded active window stack, where the boundary coordinates of the preloaded active window stack are located outside the coordinate range of the display screen.

An embodiment of the present disclosure further provides a storage medium including computer executable instructions for executing a method for updating an application prediction model when executed by a computer processor, the method including the following steps:
detecting that an application uninstallation event is triggered, and determining a first application which is uninstalled;
deleting a data log of the first application from training sample data when training sample data of an application prediction model includes the data log of the first application, and generating target training sample data; and
updating the application prediction model based on the target training sample data.

Storage medium - any of various types of memory devices or storage devices. The term "storage medium" is intended to include: a mounting medium such as a CD-ROM, a floppy disk or a tape device; a computer system memory or a random access memory, such as a DRAM, a DDRRAM, an SRAM, an EDORAM, a Rambus RAM, etc.; a nonvolatile memory, such as a flash memory, a magnetic medium (such as a hard disk or an optical storage); a register or other memory elements of similar types, etc. The storage medium may also include other types of memories or a combination thereof. Additionally, the storage medium may be located in a first computer system in which the program is executed, or may be located in a different second computer system, the second computer system being connected to the first computer system via a network, such as the Internet. The second computer system may provide program instructions to the first computer for execution. The term "storage medium" may include two or more storage mediums that can reside in different locations (e.g., in different computer systems connected through a network). A storage medium may store program instructions (e.g., embodied as a computer program) executable by one or more processors.

Of course, for the storage medium including the computer executable instructions provided by the embodiments of the present disclosure, the computer executable instructions are not limited to the update operations of the application prediction model as described above, and may also execute the relevant operations in the method for updating the application prediction model provided by any embodiment of the present disclosure.

An embodiment of the present disclosure provides a terminal, in which the apparatus for updating the application prediction model provided by the embodiments of the present disclosure can be integrated. FIG. 8 is a block diagram of a terminal provided by an embodiment of the present disclosure. The terminal 800 includes a memory 801, a processor 802, and a computer program stored on the memory and operable on the processor. The processor 802 implements the method for updating the application prediction model according to the embodiments of the present disclosure when running the computer program.

The terminal provided by the embodiments of the present disclosure can solve the problem of inconsistency between the actually installed application and the application-related data log included in the training sample data of the application prediction model when an application is uninstalled, and can effectively improve the accuracy for predicting an application to be launched using the application prediction model.

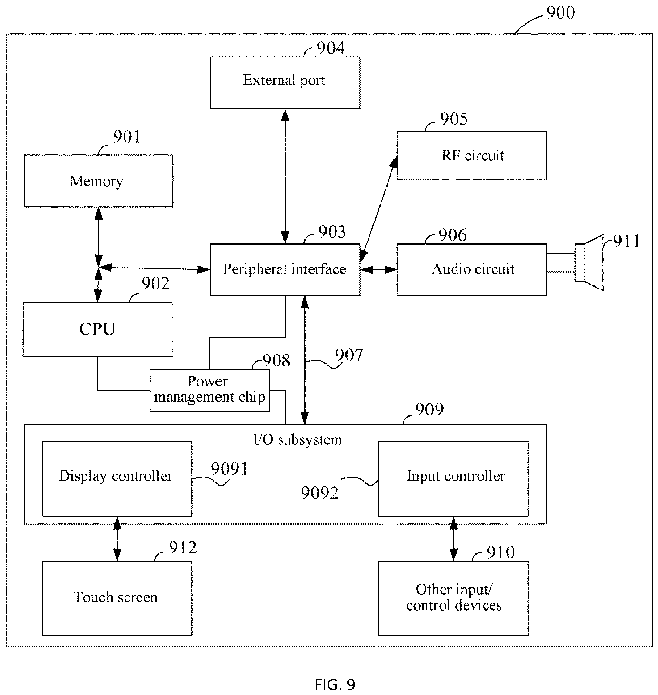

FIG. 9 is a block diagram of another terminal provided by an embodiment of the present disclosure. The terminal can include: a housing (not shown), a memory 901, a central processing unit (CPU) 902 (also referred to as a processor, hereinafter referred to as a CPU), a circuit board (not shown), and a power circuit (not shown). The circuit board is disposed inside a space enclosed by the housing; the CPU 902 and the memory 901 are disposed on the circuit board; the power circuit is configured to supply power to the circuits or devices of the terminal; the memory 901 is configured to store executable program code; the CPU 902 runs a computer program of the executable program code by reading the executable program code stored in the memory 901, to implement the following steps:
detecting that an application uninstallation event is triggered, and determining a first application which is uninstalled;
deleting a data log of the first application from training sample data when training sample data of an application prediction model includes the data log of the first application, and generating target training sample data; and
updating the application prediction model based on the target training sample data.

The terminal further includes: a peripheral interface 903, an RF (radio frequency) circuit 905, an audio circuit 906, a speaker 911, a power management chip 908, an input/output (I/O) subsystem 909, and other input/control devices 910, a touch screen 912, and an external port 904, these components communicating via one or more communication buses or signal lines 907.

It should be understood that the illustrated terminal 900 is merely one example of the terminal, and that the terminal 900 may have more or fewer components than those shown in the drawings, two or more components may be combined, or the terminal 900 may have different component configurations. The components shown in the drawings can be implemented in hardware, software, or a combination of hardware and software, the hardware including one or more signal processing and/or application specific integrated circuits.

The terminal for updating the application prediction model provided in this embodiment is described in detail below, by taking a mobile phone as an example.

The memory 901 can be accessed by the CPU 902, the peripheral interface 903, etc. And the memory 901 may include a high speed random access memory, and may also include a nonvolatile memory, such as one or more magnetic disk storage devices, flash memory devices, or other volatile solid-state storage devices.

The peripheral interface 903 can connect input and output peripherals on the device to the CPU 902 and memory 901.

The I/O subsystem 909 can connect input and output peripherals on the device, such as the touch screen 912 and other input/control devices 910, to the peripheral interface 903. The I/O subsystem 909 can include a display controller 9091 and one or more input controllers 9092 for controlling other input/control devices 910. The one or more input controllers 9092 receive electrical signals from other input/control devices 910 or transmit electrical signals to other input/control devices 910. The other input/control devices 910 may include a physical button (a pressing button, a rocker button, etc.), a dial, a slide switch, a joystick, a click wheel. It is worth noting that the input controller 9092 can be connected to any of the following: a keyboard, an infrared port, a USB interface, and indicating equipment such as a mouse.

The touch screen 912 is an input interface and an output interface between the user terminal and the user, which displays the visual output to the user. The visual output may include graphics, text, icons, videos, and the like.

The display controller 9091 in the I/O subsystem 909 receives an electrical signal from the touch screen 912 or transmits an electrical signal to the touch screen 912. The touch screen 912 detects the contact on the touch screen, and the display controller 9091 converts the detected contact into an interaction with a user interface object displayed on the touch screen 912, that is, realizing human-computer interaction. The user interface object displayed on the touch screen 912 may be the icon of a running game, the icon indicating a connection to a corresponding network and the like. It is worth noting that the device may also include a light mouse which is a touch sensitive surface that does not display a visual output, or an extension of a touch sensitive surface formed by the touch screen.

The RF circuit 905 is mainly configured to establish communication between the mobile phone and a wireless network (i.e., the network side), realizing data reception and transmission between the mobile phone and the wireless network, such as sending and receiving short messages, emails, and the like. Specifically, the RF circuit 905 receives and transmits an RF signal, which is also referred to as an electromagnetic signal. The RF circuit 905 converts an electrical signal into an electromagnetic signal or converts an electromagnetic signal into an electrical signal, and communicates with a communication network and other devices through the electromagnetic signal. The RF circuitry 905 may include a known circuit for performing these functions, which includes, but is not limited to, an antenna system, an RF transceiver, one or more amplifiers, a tuner, one or more oscillators, a digital signal processor, a CODEC (COder-DECoder) chipset, a subscriber identity module (SIM), etc.

The audio circuit 906 is mainly configured to receive audio data from the peripheral interface 903, convert the audio data into an electrical signal, and transmit the electrical signal to the speaker 911.

The speaker 911 is configured to restore a voice signal received by the mobile phone from the wireless network through the RF circuit 905 to sound, and play the sound to the user.

The power management chip 908 is configured to supply power to and conduct power management on hardware connected to the CPU 902, the I/O subsystem, and the peripheral interface.

The apparatus for updating the application prediction model, the storage medium, and the terminal provided in the foregoing embodiments can execute the method for updating the application prediction model provided by any embodiment of the present disclosure, and have corresponding functional modules for executing the method and beneficial effects thereof. For technical details that are not described in detail in the above embodiments, reference may be made to the method for updating the application prediction model provided by any embodiment of the present disclosure.

Note that the above are only the preferred embodiments of the present disclosure and the technical principles applied thereto. Those skilled in the art will understand that the present disclosure is not limited to the specific embodiments described herein, and that various changes, modifications and substitutions can be made by those skilled in the art without departing from the scope of the present disclosure. Therefore, although the present disclosure has been described in detail by the above embodiments, the present disclosure is not limited to the above embodiments. The scope of the present disclosure is subject to the scope of the appended claims.

## Claims

1. A method for updating an application prediction model, which can optimize the preloading scheme of applications in a terminal, **characterized by** comprising:
detecting (101, 501, 601) that an application uninstallation event is triggered;
determining a first application which is uninstalled;
deleting (102) a data log of the first application from training sample data when training sample data of an application prediction model comprises the data log of the first application, and generating target training sample data, wherein the application prediction model is a pre-trained learning model capable of predicting an application to be preloaded, the pre-trained learning model being trained by using the sample training data, said sample training data being collected during the user using the terminal; and
updating (103, 503, 604) the application prediction model based on the target training sample data.

2. The method according to claim 1, wherein deleting (102) the data log of the first application from the training sample data when the training sample data of the application prediction model comprises the data log of the first application, and generating target training sample data comprises:
deleting (502) a data log of a preset application use sequence from the training sample data when the training sample data of the application prediction model comprises the data log of the first application, and generating the target training sample data; wherein the preset application use sequence comprises an application sequence corresponding to the first application and a second application adjacent to the first application.

3. The method according to claim 1, wherein the training sample data comprises sample data formed by state feature information of a sample collection moment and a sample tag of the state feature information; wherein the sample tag involves an application which is launched within a preset time period after the sample collection moment; and
wherein deleting (102) the data log of the first application from the training sample data when the training sample data of the application prediction model comprises the data log of the first application, and generating target training sample data comprises:
deleting sample data that takes the first application as the sample tag from the training sample data when the training sample data of the application prediction model comprises the data log of the first application, and generating the target training sample data.

4. The method according to claim 1, wherein deleting (102) the data log of the first application from the training sample data when the training sample data of the application prediction model comprises the data log of the first application, and generating target training sample data comprises:
determining (602) a third application of a same application type as the first application when the training sample data of the application prediction model comprises the data log of the first application; and
replacing (603) the data log of the first application in the training sample data with a data log of the third application to generate the target training sample data.

5. The method according to claim 1, wherein updating (103, 503, 604) the application prediction model based on the target training sample data further comprises:
predicting a first to-be-preloaded application based on the application prediction model when an application preloading event is triggered; and preloading the first to-be-preloaded application.

6. The method according to claim 1, wherein after updating (103, 503, 604) the application prediction model based on the target training sample data, the method further comprises:
predicting (504, 605) a second to-be-preloaded application based on the updated application prediction model when an application preloading event is triggered; and preloading (505) the second to-be-preloaded application.

7. The method according to claim 5, wherein before preloading the first to-be-preloaded application, the method further comprises:
determining whether the first to-be-preloaded application comprises the first application; and
deleting the first application from the first to-be-preloaded application when the first to-be-preloaded application comprises the first application.

8. The method according to claim 7, wherein preloading the first to-be-preloaded application comprises:
preloading the first to-be-preloaded application from which the first application has been deleted.

9. The method according to claim 5, wherein preloading the first to-be-preloaded application comprises:
preloading an application interface of the first to-be-preloaded application based on a pre-created preloaded active window stack, wherein boundary coordinates of the preloaded active window stack are located outside a coordinate range of a display screen.

10. The method according to claim 6, wherein preloading (505) the second to-be-preloaded application comprises:
preloading (606) an application interface of the second to-be-preloaded application based on a pre-created preloaded active window stack, wherein boundary coordinates of the preloaded active window stack are located outside a coordinate range of a display screen.

11. The method according to claim 10, wherein preloading (606) the application interface of the second to-be-preloaded application based on the pre-created preloaded active window stack comprises:
creating a target process of the second to-be-preloaded application;
creating a task stack of the second to-be-preloaded application in the pre-created preloaded active window stack;
launching an active window of the second to-be-preloaded application in the task stack based on the target process; and
drawing and displaying the application interface of the second to-be-preloaded application based on the launched activity window.

12. The method according to claim 10, wherein after preloading (606) the application interface of the second to-be-preloaded application based on the pre-created preloaded active window stack, the method further comprises:
moving (607) an application interface of a target application comprised in the preloaded active window stack to the display screen for display when a launching instruction of the target application comprised in the second to-be-preloaded application is received.

13. The method according to claim 6, further comprising:
sending a forged focus notification to the second to-be-preloaded application, and
keeping drawing the application interface of the second to-be-preloaded application and displaying an update within a preset time period based on the forged focus notification.

14. A computer readable storage medium, **characterized by** having a computer program stored thereon, for implementing the method for updating the application prediction model according to any one of claims 1-13 when executed by a processor.

15. A terminal (800), comprising: a memory (801), a processor (802), and a computer program stored on the memory (801) and operable on the processor (802), **characterized in that** the processor (802) implements the method for updating the application prediction model according to any one of claims 1-13 when running the computer program.

## Patentansprüche

1. Verfahren zum Aktualisieren eines Anwendungsvorhersagemodells, das das Vorladeschema von Anwendungen in einem Endgerät optimieren kann, **dadurch gekennzeichnet, dass** es Folgendes umfasst:
Detektieren (101, 501, 601), dass ein Anwendungsdeinstallationsereignis ausgelöst wird;
Bestimmen einer ersten Anwendung, die deinstalliert wird;
Löschen (102) eines Datenprotokolls der ersten Anwendung aus Trainingsprobendaten, wenn die Trainingsprobendaten eines Anwendungsvorhersagemodells das Datenprotokoll der ersten Anwendung umfassen, und Erzeugen von Zieltrainingsprobendaten, wobei das Anwendungsvorhersagemodell ein vortrainiertes Lernmodell ist, das zur Vorhersage einer vorzuladenden Anwendung fähig ist, wobei das vortrainierte Lernmodell unter Verwendung der Trainingsprobendaten trainiert wird, wobei die Trainingsprobendaten während der Benutzung des Endgeräts durch den Benutzer gesammelt werden; und
Aktualisieren (103, 503, 604) des Anwendungsvorhersagemodells basierend auf den Zieltrainingsprobendaten.

2. Verfahren nach Anspruch 1, wobei das Löschen (102) des Datenprotokolls der ersten Anwendung aus den Trainingsprobendaten, wenn die Trainingsprobendaten des Anwendungsvorhersagemodells das Datenprotokoll der ersten Anwendung umfassen, und das Erzeugen von Zieltrainingsprobendaten Folgendes umfassen:
Löschen (502) eines Datenprotokolls einer voreingestellten Anwendungsverwendungssequenz aus den Trainingsprobendaten, wenn die Trainingsprobendaten des Anwendungsvorhersagemodells das Datenprotokoll der ersten Anwendung umfassen, und Erzeugen der Zieltrainingsprobendaten; wobei die voreingestellte Anwendungsverwendungssequenz eine Anwendungssequenz umfasst, die der ersten Anwendung und einer zweiten Anwendung benachbart zu der ersten Anwendung entspricht.

3. Verfahren nach Anspruch 1, wobei die Trainingsprobendaten Probendaten umfassen, die durch Zustandsmerkmalinformationen eines Probensammlungszeitpunkts und ein Proben-Tag der Zustandsmerkmalinformationen gebildet werden; wobei das Proben-Tag eine Anwendung betrifft, die innerhalb eines voreingestellten Zeitraums nach dem Probensammlungszeitpunkt gestartet wird; und wobei das Löschen (102) des Datenprotokolls der ersten Anwendung aus den Trainingsprobendaten, wenn die Trainingsprobendaten des Anwendungsvorhersagemodells das Datenprotokoll der ersten Anwendung umfassen, und das Erzeugen von Zieltrainingsprobendaten Folgendes umfassen:
Löschen von Probendaten, die die erste Anwendung als das Proben-Tag nehmen, aus den Trainingsprobendaten, wenn die Trainingsprobendaten des Anwendungsvorhersagemodells das Datenprotokoll der ersten Anwendung umfassen, und Erzeugen der Zieltrainingsprobendaten.

4. Verfahren nach Anspruch 1, wobei das Löschen (102) des Datenprotokolls der ersten Anwendung aus den Trainingsprobendaten, wenn die Trainingsprobendaten des Anwendungsvorhersagemodells das Datenprotokoll der ersten Anwendung umfassen, und das Erzeugen von Zieltrainingsprobendaten Folgendes umfassen:
Bestimmen (602) einer dritten Anwendung desselben Anwendungstyps wie die erste Anwendung, wenn die Trainingsprobendaten des Anwendungsvorhersagemodells das Datenprotokoll der ersten Anwendung umfassen; und
Ersetzen (603) des Datenprotokolls der ersten Anwendung in den Trainingsprobendaten mit einem Datenprotokoll der dritten Anwendung, um die Zieltrainingsprobendaten zu erzeugen.

5. Verfahren nach Anspruch 1, wobei das Aktualisieren (103, 503, 604) des Anwendungsvorhersagemodells basierend auf den Zieltrainingsprobendaten ferner Folgendes umfasst:
Vorhersagen einer ersten vorzuladenden Anwendung basierend auf dem Anwendungsvorhersagemodell, wenn ein Anwendungsvorladeereignis ausgelöst wird; und
Vorladen der ersten vorzuladenden Anwendung.

6. Verfahren nach Anspruch 1, wobei das Verfahren nach dem Aktualisieren (103, 503, 604) des Anwendungsvorhersagemodells basierend auf den Zieltrainingsprobendaten ferner Folgendes umfasst:
Vorhersagen (504, 605) einer zweiten vorzuladenden Anwendung basierend auf dem aktualisierten Anwendungsvorhersagemodell, wenn ein Anwendungsvorladeereignis ausgelöst wird; und
Vorladen (505) der zweiten vorzuladenden Anwendung.

7. Verfahren nach Anspruch 5, wobei das Verfahren vor dem Vorladen der ersten vorzuladenden Anwendung ferner Folgendes umfasst:
Bestimmen, ob die erste vorzuladende Anwendung die erste Anwendung umfasst; und
Löschen der ersten Anwendung aus der ersten vorzuladenden Anwendung, wenn die erste vorzuladende Anwendung die erste Anwendung umfasst.

8. Verfahren nach Anspruch 7, wobei das Vorladen der ersten vorzuladenden Anwendung Folgendes umfasst:
Vorladen der ersten vorzuladenden Anwendung, aus der die erste Anwendung gelöscht wurde.

9. Verfahren nach Anspruch 5, wobei das Vorladen der ersten vorzuladenden Anwendung Folgendes umfasst:
Vorladen einer Anwendungsschnittstelle der ersten vorzuladenden Anwendung basierend auf einem zuvor erzeugten vorgeladenen aktiven Fensterstapel, wobei sich Abgrenzungskoordinaten des vorgeladenen aktiven Fensterstapels außerhalb eines Koordinatenbereichs eines Anzeigebildschirms befinden.

10. Verfahren nach Anspruch 6, wobei das Vorladen (505) der zweiten vorzuladenden Anwendung Folgendes umfasst:
Vorladen (606) einer Anwendungsschnittstelle der zweiten vorzuladenden Anwendung basierend auf einem zuvor erzeugten vorgeladenen aktiven Fensterstapel, wobei sich Abgrenzungskoordinaten des vorgeladenen aktiven Fensterstapels außerhalb eines Koordinatenbereichs eines Anzeigebildschirms befinden.

11. Verfahren nach Anspruch 10, wobei das Vorladen (606) der Anwendungsschnittstelle der zweiten vorzuladenden Anwendung basierend auf dem zuvor erzeugten vorgeladenen aktiven Fensterstapel Folgendes umfasst:
Erzeugen eines Zielprozesses der zweiten vorzuladenden Anwendung;
Erzeugen eines Aufgabenstapels der zweiten vorzuladenden Anwendung in dem zuvor erzeugten vorgeladenen aktiven Fensterstapel;
Starten eines aktiven Fensters der zweiten vorzuladenden Anwendung in dem Aufgabenstapel basierend auf dem Zielprozess; und
Zeichnen und Anzeigen der Anwendungsschnittstelle der zweiten vorzuladenden Anwendung basierend auf dem gestarteten Aktivitätsfenster.

12. Verfahren nach Anspruch 10, wobei das Verfahren nach dem Vorladen (606) der Anwendungsschnittstelle der zweiten vorzuladenden Anwendung basierend auf dem zuvor erzeugten vorgeladenen aktiven Fensterstapel ferner Folgendes umfasst:
Bewegen (607) einer Anwendungsschnittstelle einer Zielanwendung, die in dem vorgeladenen aktiven Fensterstapel enthalten ist, zu dem Anzeigebildschirm zur Anzeige, wenn eine Startanweisung der Zielanwendung, die in der zweiten vorzuladenden Anwendung enthalten ist, empfangen wird.

13. Verfahren nach Anspruch 6, das ferner Folgendes umfasst:
Senden einer Forged-Focus-Benachrichtigung zu der zweiten vorzuladenden Anwendung, und
Fortführen des Zeichnens der Anwendungsschnittstelle der zweiten vorzuladenden Anwendung und Anzeigen einer Aktualisierung innerhalb eines voreingestellten Zeitraums basierend auf der Forged-Focus-Benachrichtigung.

14. Computerlesbares Speicherungsmedium, **dadurch gekennzeichnet, dass** es ein darauf gespeichertes Computerprogramm zum Implementieren des Verfahrens zum Aktualisieren des Anwendungsvorhersagemodells nach einem der Ansprüche 1-13 bei seiner Ausführung durch einen Prozessor aufweist.

15. Endgerät (800), das Folgendes umfasst: einen Speicher (801), einen Prozessor (802) und ein auf dem Speicher (801) gespeichertes und auf dem Prozessor (802) betreibbares Computerprogramm, **dadurch gekennzeichnet, dass** der Prozessor (802) das Verfahren zum Aktualisieren des Anwendungsvorhersagemodells nach einem der Ansprüche 1-13 implementiert, wenn er das Computerprogramm ausführt.

## Revendications

1. Procédé destiné à mettre à jour un modèle de prédiction d'application, qui peut optimiser le schéma de préchargement d'applications dans un terminal, **caractérisé en ce qu'**il comprend :
la détection (101, 501, 601) qu'un événement de désinstallation d'application est déclenché ;
la détermination d'une première application qui est désinstallée ;
la suppression (102) d'un journal de données de la première application à partir des données d'échantillon d'apprentissage lorsque les données d'échantillon d'apprentissage d'un modèle de prédiction d'application comprennent le journal de données de la première application, et la génération de données d'échantillon d'apprentissage cible, le modèle de prédiction d'application étant un modèle d'apprentissage pré-appris capable de prédire une application devant être préchargée, le modèle d'apprentissage pré-appris étant appris en utilisant les données d'échantillon d'apprentissage, lesdites données d'échantillon d'apprentissage étant collectées pendant que l'utilisateur utilise le terminal ; et
la mise à jour (103, 503, 604) du modèle de prédiction d'application sur la base des données d'échantillon d'apprentissage cible.

2. Procédé selon la revendication 1, la suppression (102) du journal de données de la première application à partir des données d'échantillon d'apprentissage lorsque les données d'échantillon d'apprentissage du modèle de prédiction d'application comprennent le journal de données de la première application, et la génération de données d'échantillon d'apprentissage cible comprenant :
la suppression (502) d'un journal de données d'une séquence d'utilisation d'application prédéterminée à partir des données d'échantillon d'apprentissage lorsque les données d'échantillon d'apprentissage du modèle de prédiction d'application comprennent le journal de données de la première application, et la génération des données d'échantillon d'apprentissage cible ; la séquence d'utilisation d'application prédéterminée comprenant une séquence d'application correspondant à la première application et une deuxième application adjacente à la première application.

3. Procédé selon la revendication 1, les données d'échantillon d'apprentissage comprenant des données d'échantillon formées par des informations de caractéristiques d'état d'un moment de collecte d'échantillon et une étiquette d'échantillon des informations de caractéristiques d'état ; l'étiquette d'échantillon impliquant une application qui est lancée dans une période de temps prédéterminée après le moment de collecte d'échantillon ; et
la suppression (102) du journal de données de la première application à partir des données d'échantillon d'apprentissage lorsque les données d'échantillon d'apprentissage du modèle de prédiction d'application comprennent le journal de données de la première application, et la génération de données d'échantillon d'apprentissage cible comprenant :
la suppression des données d'échantillon qui prennent la première application comme étiquette d'échantillon à partir des données d'échantillon d'apprentissage lorsque les données d'échantillon d'apprentissage du modèle de prédiction d'application comprennent le journal de données de la première application, et la génération des données d'échantillon d'apprentissage cible.

4. Procédé selon la revendication 1, la suppression (102) du journal de données de la première application à partir des données d'échantillon d'apprentissage lorsque les données d'échantillon d'apprentissage du modèle de prédiction d'application comprennent le journal de données de la première application, et la génération des données d'échantillon d'apprentissage cible comprenant :
la détermination (602) d'une troisième application d'un même type d'application que la première application lorsque les données d'échantillon d'apprentissage du modèle de prédiction d'application comprennent le journal de données de la première application ; et
le remplacement (603) du journal de données de la première application dans les données d'échantillon d'apprentissage par un journal de données de la troisième application pour générer les données d'échantillon d'apprentissage cible.

5. Procédé selon la revendication 1, la mise à jour (103, 503, 604) du modèle de prédiction d'application sur la base des données d'échantillon d'apprentissage cible comprenant en outre :
la prédiction d'une première application devant être préchargée sur la base du modèle de prédiction d'application lorsqu'un événement de préchargement d'application est déclenché ; et le préchargement de la première application devant être préchargée.

6. Procédé selon la revendication 1, après avoir mis à jour (103, 503, 604) le modèle de prédiction d'application sur la base des données d'échantillon d'apprentissage cible, le procédé comprenant en outre :
la prédiction (504, 605) d'une deuxième application devant être préchargée sur la base du modèle de prédiction d'application mis à jour lorsqu'un événement de préchargement d'application est déclenché ; et le préchargement (505) de la deuxième application devant être préchargée.

7. Procédé selon la revendication 5, avant de précharger la première application devant être préchargée, le procédé comprenant en outre :
la détermination du fait que la première application devant être préchargée comprend la première application ; et
la suppression de la première application à partir de la première application devant être préchargée lorsque la première application devant être préchargée comprend la première application.

8. Procédé selon la revendication 7, le préchargement de la première application devant être préchargée comprenant :
le préchargement de la première application devant être préchargée à partir de laquelle la première application a été supprimée.

9. Procédé selon la revendication 5, le préchargement de la première application devant être préchargée comprenant :
le préchargement d'une interface d'application de la première application devant être préchargée sur la base d'un empilement de fenêtres actives préchargées pré-créé, les coordonnées de limite de l'empilement de fenêtres actives préchargées étant situées à l'extérieur d'une plage de coordonnées d'un écran d'affichage.

10. Procédé selon la revendication 6, le préchargement (505) de la deuxième application devant être préchargée comprenant :
le préchargement (606) d'une interface d'application de la deuxième application devant être préchargée sur la base d'un empilement de fenêtres actives préchargées pré-créé, les coordonnées de limite de l'empilement de fenêtres actives préchargées étant situées à l'extérieur d'une plage de coordonnées d'un écran d'affichage.

11. Procédé selon la revendication 10, le préchargement (606) de l'interface d'application de la deuxième application devant être préchargée sur la base de l'empilement de fenêtres actives préchargées comprenant :
la création d'un processus cible de la deuxième application devant être préchargée ;
la création d'un empilement de tâches de la deuxième application devant être préchargée dans l'empilement de fenêtres actives préchargées pré-créé ;
le lancement d'une fenêtre active de la deuxième application devant être préchargée dans l'empilement de tâches sur la base du processus cible ; et
le dessin et l'affichage de l'interface d'application de la deuxième application devant être préchargée sur la base de la fenêtre d'activité lancée.

12. Procédé selon la revendication 10, après avoir préchargé (606) l'interface d'application de la deuxième application devant être préchargée sur la base de l'empilement de fenêtres actives préchargées pré-créé, le procédé comprenant en outre :
le déplacement (607) d'une interface d'application d'une application cible comprise dans l'empilement de fenêtres actives préchargées vers l'écran d'affichage pour affichage lorsqu'une instruction de lancement de l'application cible comprise dans la deuxième application devant être préchargée est reçue.

13. Procédé selon la revendication 6, comprenant en outre :
l'envoi d'une fausse notification de mise au point à la deuxième application devant être préchargée, et
le maintien du dessin de l'interface d'application de la deuxième application devant être préchargée et l'affichage d'une mise à jour dans une période de temps prédéterminée sur la base de la fausse notification de mise au point.

14. Support de stockage lisible par ordinateur, **caractérisé en ce qu'**un programme informatique y est stocké, pour mettre en œuvre le procédé de mise à jour du modèle de prédiction d'application selon l'une quelconque des revendications 1 à 13 lorsqu'il est exécuté par un processeur.

15. Terminal (800), comprenant : une mémoire (801), un processeur (802), et un programme informatique stocké sur la mémoire (801) et utilisable sur le processeur (802), **caractérisé en ce que** le processeur (802) met en œuvre le procédé de mise à jour du modèle de prédiction d'application selon l'une quelconque des revendications 1 à 13 lorsqu'il exécute le programme informatique.
